# EUROPEAN PATENT APPLICATION

(11) **EP 3 451 236 A1**
(43) Date of publication of application: **06.03.2019**
(21) Application number: 16899898.7
(22) Date of filing: 04.05.2016
(51) Int. Cl.: G06N 3/02

(54) **METHOD AND DEVICE FOR EXECUTING FORWARDING OPERATION OF FULLY-CONNECTED LAYERED NEURAL NETWORK**

(30) Priority: 27.04.2016 CN 201610270004
(71) Applicant: Cambricon Technologies Corporation Limited, Beijing 100190 (CN)
(72) Inventor: LIU, Shaoli, Beijing 100190 (CN); LAN, Huiying, Beijing 100190 (CN); GUO, Qi, Beijing 100190 (CN); CHEN, Yunji, Beijing 100190 (CN); CHEN, Tianshi, Beijing 100190 (CN)
(74) Representative: AWA Sweden AB
(86) International application number: PCT/CN2016/080968
(87) International publication number: WO 2017/185387

(57) **Abstract**

The present invention provides a device performing a forward propagation process for fully connected layers of artificial neural network, comprising an instruction storage unit, a controller unit, a data access unit, an interconnection module, a master operation module and a plurality of slave operation modules. The device may implement a forward propagation process of single-layer or multi-layer fully connected layers of artificial neural network. For each layer, the intermediate vector of the layer is first calculated by weighted summation of the input neuron vector, then the intermediate result vector is biased and activated to obtain the output neuron vector. The output neuron vector is the input neuron vector of the next layer.

## Description

### FIELD OF THE INVENTION

The present invention generally relates to the artificial neural network, in particular, to a device and method for performing a forward propagation process for fully connected layers of artificial neural network.

### BACKGROUND OF THE INVENTION

Multi-layer artificial neural networks are widely used in the fields of pattern recognition, image processing, function approximation and optimization calculation. Due to high recognition accuracy and good parallelism, multi-layer artificial networks have received more and more attention in the academic and industrial circles in recent years. Artificial neural network involves a variety of algorithms, of which the fully connected layer is an important algorithm in artificial neural networks and is widely used in various artificial neural network models.

A known method supporting forward propagation process of artificial neural network fully connected multi-layer is using the general-purpose processor. This method supports the above algorithm by using general-purpose register files and general-purpose functions to execute general instructions. One of the disadvantages for this method is that the performance of a single general-purpose processor is low, and it cannot meet the performance requirements of the usual multi-layer artificial neural network operations. When multiple general-purpose processors are used to perform in parallel, the mutual communication between general purpose processors also becomes a performance bottleneck. In addition, the general-purpose processor has to decode the forward propagation process of a multi-layer artificial neural network into a long column of operations and memory access instruction sequence, and the processor front-end decoding brings a large power consumption overhead.

Another known method supporting forward propagation process of multi-layer artificial neural network is using the graphics processor (GPU). This method supports the above algorithm by using general-purpose register stacks and universal stream processing unit to execute general SIMD instructions. Since the GPU is a device dedicated to performing graphic image operations and scientific operations without dedicated support for multi-layer artificial neural network operations, it still requires a large amount of front-end decoding to perform multi-layer artificial neural network operations, bringing a lot of extra costs. In addition, the GPU has only a small on-chip cache, and the model data (weights) of multi-layer artificial neural networks have to be transferred from off-chip repeatedly. So off-chip bandwidth becomes a major performance bottleneck.

### OBJECTS AND SUMMARY OF THE INVENTION

One aspect of the present invention provides a device performing a forward propagation process for fully connected layers of artificial neural network, comprising an instruction storage unit, a controller unit, a data access unit, an interconnection module, a master operation module and a plurality of slave operation modules, wherein:
the instruction storage unit reads an instruction through the data access unit and stores the read instruction;
the controller unit reads the instruction from the instruction storage unit and translates it into a control signal for controlling the behavior of other modules, the other modules including the data access unit, the master operation module and the plurality of slave operation module;
the data access unit performs data or instruction read and write operation between the external address space and the device;
the interconnection module is used to connect the master operation module and the slave operation module;
the master operation module is used to implement the function activation operation in the algorithm for fully connected layers of artificial neural network;
the slave operation module is used to implement the multiplication and addition operations for the input neuron and weight parameters in the algorithm for fully connected layers of artificial neural network;
the interconnection module is used for the data transmission between the master and slave operation modules; prior to the forward propagation process of the fully connected layers of neural network, the master operation module transfers the input neuron vector to every slave operation module through the interconnection module; after the calculation of the slave operation module is completed, the interconnection module combines level by level the output neuron value of each slave operation module into an intermediate result vector and transfers it back to the master operation module for follow-up calculation.

Another aspect of the present invention provides a method for performing a forward propagation process for single-layer fully connected layer of artificial neural network using above device.

Another aspect of the present invention provides a method for performing a forward propagation process for multi-layer fully connected layers of artificial neural network using above device.
The device may be applied to the following (including but not limited to) scenes: various electronics such as data processing, robot, computer, printer, screener, telephone, tablet, smart terminal, cell phone, tachograph, navigator, sensor, camera, cloud server, camera, video camera, projector, watch, headset, mobile storage, wearable device; various transportation tools such as plane, ship, vehicle; various household appliances such as TV, A/C, microwave, fridge, electric cooker, humidifier, washing machine, electric light, gas stove, range hood; and various medical equipment including nuclear magnetic resonance, B ultrasound, electrocardiograph.

### BRIEF DESCRIPTION OF FIGURES

For a more complete understanding of the present invention and its advantages, reference will now be made to the following description taken in conjunction with the accompanying drawings, in which:
Fig. 1 is a schematic block view of the overall structure of the device for performing the forward propagation process of fully connected layers of artificial neural network, according to the embodiments of the present invention.
Fig. 2 is a schematic view illustrating the structure of the H-tree module (one implementation of interconnection module) in the device for performing the forward propagation process of fully connected layers of artificial neural network, according to the embodiments of the present invention.
Fig. 3 is an example block view of the structure of the master operation module in the device for performing the forward propagation process of fully connected layers of artificial neural network, according to the embodiments of the present invention.
Fig. 4 is an example block view of the structure of the slave operation module in the device for performing the forward propagation process of fully connected layers of artificial neural network, according to the embodiments of the present invention.
Fig. 5 is an example block view of the process of the forward propagation process of neural network fully connected layer, according to the embodiments of the present invention.
Fig. 6 illustrates one implementation for a forward propagation process of single fully connected layer of artificial neural network, according to an embodiment of the present invention.
Fig. 7 is a flow chart of the process of the operation of single fully connected layer of artificial neural network, according to the embodiments of the present invention.

In all the drawings, the same devices, components, units, etc. are denoted with the same reference numerals.

### DETAILED DESCRIPTION OF THE EMBODIMENTS

Other aspects, advantages, and salient features of the invention will become apparent to those skilled in the art from the following detailed description of exemplary embodiments of the invention in conjunction with the accompanying drawings.

In the present invention, the terms "include" and "including" and derivatives thereof are intended to be inclusive and not limiting; the term "or" is inclusive, meaning "and/or".

In the present specification, the following various embodiments for describing the principles of the present invention are merely illustrative and should not be construed in any way as limiting the scope of the invention. The following description with reference to the accompanying drawings is provided to assist in a comprehensive understanding of exemplary embodiments of the invention as defined by the claims and their equivalents. The following description includes various specific details to assist in that understanding but these details are to be regarded as merely exemplary. Accordingly, those of ordinary skill in the art will recognize that various changes and modifications of the embodiments described herein may be made without departing from the scope and spirit of the invention. In addition, descriptions of well-known functions and constructions are omitted for clarity and conciseness. Moreover, like reference numerals are used for like functions and operations throughout the drawings.

The forward propagation process for multi-layer fully connected layer of artificial neural network according to the embodiments of the present invention comprises two or more layers of neurons. For each layer, the input neuron vector firstly performs a dot product operation with the weight vector, the result is biased, and the activation function gets the output neuron. Among them, operations of biasing and activating are optional. The activation function may be any one of sigmoid, tanh, relu, and softmax.

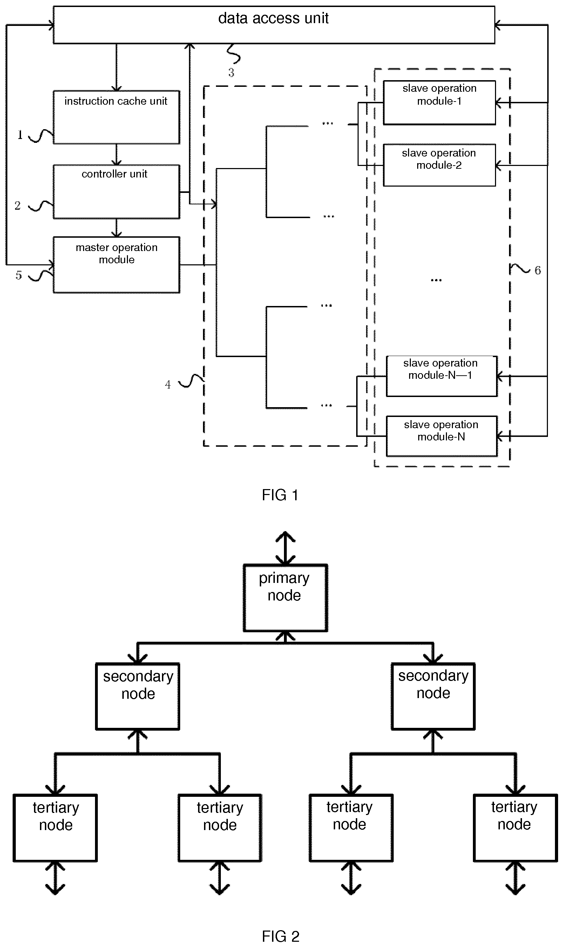

Fig. 1 is a schematic block view of the overall structure of the device for performing the forward propagation process of fully connected layers of artificial neural network, according to the embodiments of the present invention. As shown in Fig. 1, the device includes an instruction storage unit 1, a controller unit 2, a data access unit 3, an interconnection module 4, a master operation module 5 and a plurality of slave operation modules 6. The instruction storage unit 1, controller unit 2, data access unit 3, interconnection module 4, master operation module 5 and the plurality of slave operation modules 6 may implemented by a hardware circuit (including but not limited to FPGA, CGRA, ASICs, analog circuits or memristors).

The instruction storage unit 1 reads an instruction through the data access unit 3 and stores the read instruction. The instruction storage unit 1 may be implemented by various different memory devices (SRAM, DRAM, memristor, 3D-DRAM or non-volatile memory, etc.).

The controller unit 2 reads the instruction from the instruction storage unit 1 and translates it into a control signal for controlling the behavior of other modules for example, including the data access unit 3, the master operation module 5 and the plurality of slave operation module 6.

The data access unit 3 may access an external address space, and directly write the data to each storage unit in the device, or write data to the external address space from each storage unit in the device.

The interconnection module 4 is used to connect the master operation module and the slave operation module, and may implement different interconnection topologies (such as tree structure, ring structure, grid structure, hierarchical interconnection, bus structure).

Fig. 2 illustrates one embodiment of the interconnection module 4: H-tree structure. The H-tree module 4 constitutes a data path between the master operation module 5 and the plurality of slave operation modules 6 and has an H-tree structure. H-tree is a binary tree path formed by a plurality of nodes. Each node equally sends the upstream data to two downstream nodes, merges the data returned by the two downstream nodes and returned them to the upstream nodes. For example, in the phase of starting the training of the fully connected layer of artificial neural network, the neuron data in the master operation module 5 is sent to each slave operation module 6 through the H-tree module 4; after the operation process of the slave operation module 6 is completed, the value of each of the neurons output from each operation module is spliced level by level into a complete vector formed by neurons in the H-tree module. For example, assuming that there are a total of N slave operation modules in the device, the intermediate result vector is segmented by N, wherein each segment has N elements and the i-th slave operation module calculates the i-th element in each segment. N elements are spliced into a vector of length N through the H-tree module and returned to the master operation module. Therefore, if there are only N output neurons in the network, each slave operation module only has to output the value of a single neuron. If the network has m*N output neurons, each slave operation module has to output m neuron values.

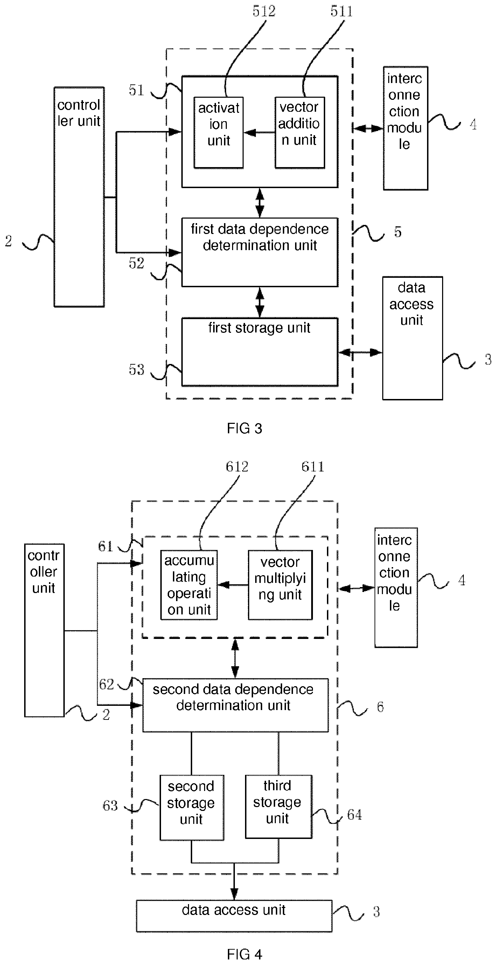

Fig. 3 is an example block view of the structure of the master operation module 5 in the device for performing the forward propagation process of fully connected layers of artificial neural network, according to the embodiments of the present invention. As shown in Fig. 3, the master operation module 5 includes a first operation unit 51, a first data dependence determination unit 52, and the first storage unit 53.

Among those, the first operation unit 51 includes a vector addition unit 511 and an activation unit 512. The first operation unit 51 receives the control signal from the controller unit to complete various operation functions of the master operation module 5, and the vector addition unit 511 is used to implement the addition bias operation in the forward propagation process of the fully connected layers of artificial neural network. The component adds the biased vector with the intermediate result vector transmitted back from the slave operation module 6 through the interconnection module 4, and the output thereof is a vector-added value. The activation operation unit 512 is used to implement an operation for the activation function of the artificial neural network convolution fully connected layer. The input of the component is the intermediate result transmitted back from the slave operation module 6 through the interconnection module 4, or the output result of the vector addition unit 511, and the output thereof is the neuron vector after function activation. The biased vector may be read from the external address space or may be stored locally.

The first data dependence determination unit 52 is a port where the first operation unit 51 reads and writes the first storage unit 53 and ensures the read and write consistency of the data in the first storage unit 53. At the same time, the first data dependence determination unit 52 is also responsible for sending the data read from the first storage unit 53 to the slave operation module through the interconnection module 4, and the output data of the slave operation module 6 is sent directly to the first operation unit 51 through the interconnection module 4. The instruction output from the controller unit 2 is sent to the operation unit 51 and the first data dependence determination unit 52 to control their behaviors.

The storage unit 53 is used to cache the input data and the output data used by the master operation module 5 in the calculation process.

Fig. 4 is an example block view of the structure of the slave operation module 6 in the device for performing the forward propagation process of fully connected layers of artificial neural network, according to the embodiments of the present invention. As shown in Fig. 4, each slave operation module 6 includes a second operation unit 61, a data dependence determination unit 62, a second storage unit 63 and a third storage unit 64.

Then the second operation unit 61 receives a control signal sent by the controller unit 2 and performs a dot product operation, and includes a vector multiplying unit 611 and an accumulating operation unit 612. Among them, the vector multiplying unit 611 is used to implement the alignment multiplication of the neuron vector and the weight vector, and the accumulation operation unit 612 is used to implement the operation of accumulating each item of the vector together.

The second data dependence determination unit 62 is responsible for the reading and writing operation to the second storage unit 63 in the calculation process. The third storage unit 62, before performing the read and writing operation, firstly guarantees that there is no consistency conflict in reading and writing among instructions. For example, all control signals addressed to the data dependence unit 62 are stored in an instruction queue internal to the data dependence unit 62 in which if the range of reading data for the read instruction conflicts with the range of writing data for the write instruction located in front of the queue, then the instruction should not be performed until the dependent write instruction is performed.

The second storage unit 63 caches the data of the input neuron vector data and the output neuron value data of the slave operation module 6.

The third storage unit 64 caches the weight data required by the slave operation module 6 in the calculation process. According to embodiments of the present invention, each slave operation module 6 may store only the weights between all input neurons and partial output neurons. The output neurons are segmented according to the number N of slave operation modules, and the weight corresponding to the n-th output neuron of each segment is stored in the n-th slave operation module.

The slave operation module 6 implements the parallelism of the dot product operation in the forward propagation process for fully connected layers of artificial neural network. The forward propagation process for fully connected layers of artificial neural network is y=f (wx+b), wherein the multiplication of the weight matrix w and the input neuron vector in may be divided into uncorrelated parallel computing subtasks, where in is a column vector. Each slave operation module 6 may only calculate the dot product of the corresponding rows of the in column vector and the weight matrix w to obtain the output as a one-dimensional component of the intermediate result vector. These one-dimensional components are interconnected step by step in the interconnection module 4 to obtain the intermediate result vector. Therefore, the calculation process becomes a part of the parallel calculation process and the subsequent combination process. Each of the slave operation modules 6 calculates the output neuron value, and all of the output neuron values are sliced in the interconnection module 4 to obtain the intermediate result vector. Each slave operation module 6 only has to calculate the output neuron value corresponding to this module in the intermediate result vector y.

According to embodiments of the present invention, an instruction set for performing forward propagation process of artificial neural network on above-mentioned device is provided. The instruction set also includes a COMPUTE instruction, a CONFIG instruction, an IO instruction, a NOP instruction, a JUMP instruction and a MOVE instruction, wherein:
the COMPUTE instruction configures various constants required for the current layer operation before the calculation for each layer of artificial neural network starts;
the COMPUTE instruction completes an arithmetic and logic calculation for each layer of artificial neural network;
IO instruction allows for reading in the input data required in operation from the external address space and storing the data back to the external space after the operation is completed.

The NOP instruction is responsible for clearing control signals in all control signal buffer queues in the current device to ensure that all instructions before the NOP instruction have been instructed. The NOP instruction itself does not contain any operations;
the JUMP instruction is responsible for controlling the jump of the next instruction address to be read from the instruction storage unit for the jump of the control flow;
the MOVE instruction is responsible for moving the data at a certain address space in the device's internal address space to another address in the device's internal address space. This process is independent of the operation unit and does not occupy the resources of the operation unit during operation.

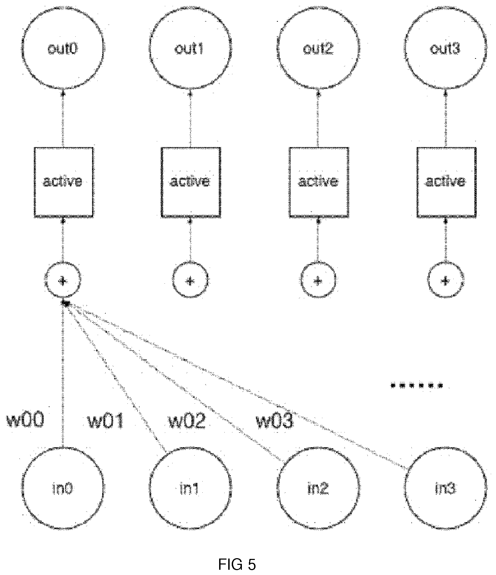

Fig. 5 is an example block view of the forward propagation process of full y connected layers of artificial neural network, according to the embodiments of the present invention. In different slave operation modules 6, the input neuron vector respectively performs dot product operation with the weight vector of the slave operation module 6 to obtain corresponding output neuron values. All the se output neuron values form an intermediate result vector. The intermediate res ult vector is subjected to an activation operation, or by adding an biased vector and to an activation operation, to obtain the final output neuron vector of this la yer of neural network. The formula is described as out=f (w*in+b), where out o utputs the neuron vector, in is the input neuron vector, b is the biased vector, w i s the weight matrix, and f is the active function (active). The weight vector of ea ch slave operation module 6 is a row vector corresponding to the slave operatio n module 6 in the weight matrix. The interconnection module sends the input ne uron vectors [in0,...,inN] to all slave operation modules for temporarily storing i n the neuron buffer unit. For the i-th slave operation module, the dot product of its corresponding weight vectors [w_i0,...,w_iN] and the input neuron vector is calculated. The results output from the slave operation module are combined int o a complete intermediate result vector through the interconnection module and returned to the master operation module, performs an activation operation in the master operation module, or performs biased and activation operations to obtai n the final output neuron vectors [Out0,out1,out2,...,outN].

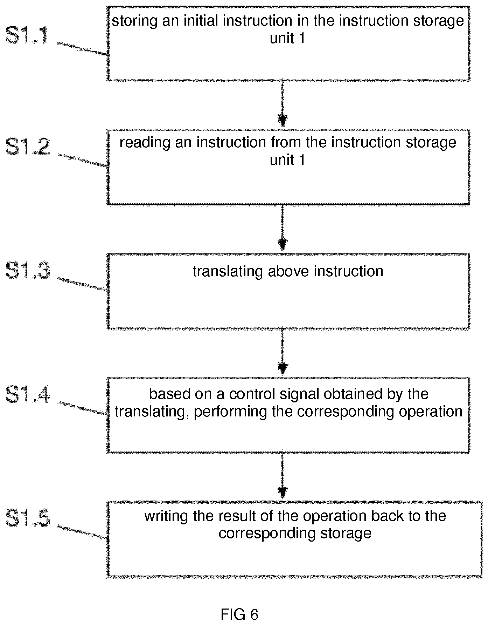

Fig. 6 illustrates one implementation for a forward propagation process of single fully connected layer of artificial neural network, according to an embodiment of the present invention. The flow chart describes the process of forward propagation process for single fully connected layer of artificial neural network shown in Fig. 1 using the device and instruction set of the present invention.
Step S1.1, storing an initial instruction in the instruction storage unit 1;
Step S1.2, reading an instruction from the instruction storage unit 1;
Step S1.3, translating above instruction;
step S1.4, based on a control signal obtained by the translating, performing the corresponding operation;
Step S1.5, writing the result of the operation back to the corresponding storage.

At step S1.1, an initialization IO instruction may be stored for carrying subsequent instructions.

At step S1.2, the readable instruction includes, but is not limited to a COMPUTE instruction, a CONFIG instruction, an IO instruction, a NOP instruction, a JUMP instruction and a MOVE instruction.

At step S1.3, the control signal of the corresponding module is obtained by decoding according to the type of operation of the instruction (CONFIG, COMPUTE, IO, NOP, JUMP, MOVE, etc.). For the CONFIG instruction, the configuration information for configuring the remaining modules is obtained by decoding. For the COMPUTE instruction, the control signal for the master and slave operation modules is obtained by decoding. For the IO instruction, the control signal for the data access module is obtained by decoding. For the NOP instruction, it does not generate actual control signal and is only used for clearing control signals in all control signal buffer queues in the current device to ensure that all instructions before the NOP instruction have been instructed. For the JUMP instruction, the control signal for the jump instruction stream is obtained. For the MOVE instruction, the control signal for transferring data inside the device is obtained.

At step S1.4, above-mentioned modules 2-6 perform respective operations according to the control signal. Taking the COMPUTE instruction for performing forward of neural network fully connected layer as an example, the interconnection module sends the input neuron vectors [in0,...,inN] to all slave operation modules for temporarily storing in the second storage unit 63. For the i-th slave operation module, the dot product of its corresponding weight vectors [w_i0,...,w_iN] and the input neuron vector is calculated. The results output from the slave operation module are combined into a complete output vector through the interconnection module and returned to the master operation module, performs an activation operation in the master operation module, or performs biased and activation operations to obtain the final output neuron vectors [Out0,out1,out2,...,outN].

At step S1.5, each module writes the result of the operation back to the corresponding storage unit. Taking the forward propagation process of neural network fully connected layer as an example, the output neuron vector obtained by the master operation module is written back to the first storage unit 53.

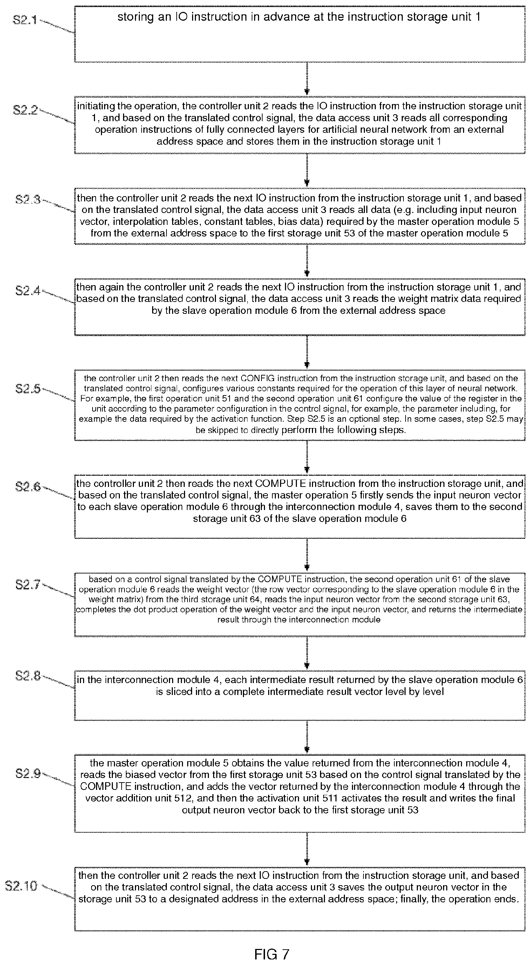

Fig. 7 illustrates another detailed implementation for a forward propagation process of single fully connected layer of artificial neural network.

At step S2.1, an IO instruction is initially, stored in the instruction storage unit 1.

At step S2.2, initiating the operation, the controller unit 2 reads the IO instruction from the instruction storage unit 1, and based on the translated control signal, the data access unit 3 reads all corresponding operation instructions of fully connected layers for artificial neural network from an external address space and stores them in the instruction storage unit 1.

At step S2.3, then the controller unit 2 reads the next IO instruction from the instruction storage unit 1, and based on the translated control signal, the data access unit 3 reads all data (e.g. including input neuron vector, interpolation tables, constant tables, bias data) required by the master operation module 5 from the external address space to the first storage unit 53 of the master operation module 5.

At step S2.4, then again the controller unit 2 reads the next IO instruction from the instruction storage unit 1, and based on the translated control signal, the data access unit 3 reads the weight matrix data required by the slave operation module 6 from the external address space.
at step S2.5, the controller unit 2 then reads the next CONFIG instruction from the instruction storage unit, and based on the translated control signal, configures various constants required for the operation of this layer of neural network. For example, the first operation unit 51 and the second operation unit 61 configure the value of the register in the unit according to the parameter configuration in the control signal, for example, the parameter including, for example the data required by the activation function. Step S2.5 is an optional step. In some cases, step S2.5 may be skipped to directly perform the following steps.

At step S2.6, the controller unit 2 then reads the next COMPUTE instruction from the instruction storage unit, and based on the translated control signal, the master operation 5 firstly sends the input neuron vector to each slave operation module 6 through the interconnection module 4, saves them to the second storage unit 63 of the slave operation module 6.

At step S2.7, based on a control signal translated by the COMPUTE instruction, the second operation unit 61 of the slave operation module 6 reads the weight vector (the row vector corresponding to the slave operation module 6 in the weight matrix) from the third storage unit 64, reads the input neuron vector from the second storage unit 63, completes the dot product operation of the weight vector and the input neuron vector, and returns the intermediate result through the interconnection module.

At step S2.8, in the interconnection module 4, each intermediate result returned by the slave operation module 6 is sliced into a complete intermediate result vector level by level.

At step S2.9, the master operation module 5 obtains the value returned from the interconnection module 4, reads the biased vector from the first storage unit 53 based on the control signal translated by the COMPUTE instruction, and adds the vector returned by the interconnection module 4 through the vector addition unit 512, and then the activation unit 511 activates the result and writes the final output neuron vector back to the first storage unit 53.

At step S2.10, then the controller unit 2 reads the next IO instruction from the instruction storage unit, and based on the translated control signal, the data access unit 3 saves the output neuron vector in the storage unit 53 to a designated address in the external address space; finally, the operation ends.

For multi-layer neural network fully connected layer, its implementation is similar to that of single fully connected layer of artificial neural network, wherein after performing the previous fully connected layer of artificial neural network, the operation instruction of the next layer uses the output neuron address of the previous layer stored in the master operation unit as the input neuron address of the present layer. Similarly, the weight address and biased address in the instruction are also changed to the corresponding address in this layer.

Through employing a device and an instruction set for performing a forward propagation process of fully connected layers of artificial neural network, the problems of insufficient CPU and GPU performance in operation and large front-end decoding. It effectively improves the support for the forward propagation process for multi-layer fully connected layer of artificial neural network.

Through employing a dedicated on-chip storage for the forward propagation process for multi-layer fully connected layer of artificial neural network, the reusability of input neuron and convolution kernel data is fully tapped to avoid repeatedly reading these data into memory, reducing memory access bandwidth and avoiding the problem that the memory bandwidth becomes a bottleneck in the performance of the forward propagation process for multi-layer fully connected layer of artificial neural network.

Processes or methods depicted in the preceding figures may be implemented by the processing logic including hardware (eg, circuitry, dedicated logic, etc.), firmware, software (eg, software embodied on a non-transitory computer readable medium) or the combination thereof to perform. Although the processes or methods are described above in terms of certain sequential operations, it should be understood that some of the described operations may be performed in a different order. In addition, some operations may be performed in parallel rather than sequentially.

In the foregoing specification, various embodiments of the present invention have been described with reference to specific exemplary embodiments thereof. Obviously, various modifications may be made to the embodiments without departing from the broader spirit and scope of the invention as set forth in the appended claims. Accordingly, the specification and drawings are to be regarded in an illustrative rather than a restrictive sense.

## Claims

1. A device performing a forward propagation process for fully connected layers of artificial neural network, comprising an instruction storage unit, a controller unit, a data access unit, an interconnection module, a master operation module and a plurality of slave operation modules, wherein:
the instruction storage unit reads an instruction through the data access unit and stores the read instruction;
the controller unit reads the instruction from the instruction storage unit and translates it into a control signal for controlling the behavior of other modules, the other modules including the data access unit, the master operation module and the plurality of slave operation module;
the data access unit performs data or instruction read and write operation between the external address space and the device;
the interconnection module is used to connect the master operation module and the slave operation module;
the master operation module is used to implement the function activation operation in the algorithm for fully connected layers of artificial neural network;
the slave operation module is used to implement the multiplication and addition operations for the input neuron and weight parameters in the algorithm for fully connected layers of artificial neural network;
the interconnection module is used for the data transmission between the master and slave operation modules; prior to the forward propagation process of the fully connected layers of neural network, the master operation module transfers the input neuron vector to every slave operation module through the interconnection module; after the calculation of the slave operation module is completed, the interconnection module combines level by level the output neuron value of each slave operation module into an intermediate result vector and transfers it back to the master operation module for follow-up calculation;

2. The device according to claim 1, wherein the plurality of slave operation modules utilizes the same input neuron vector and their respective weight vectors to calculate their respective output neuron values in parallel; the weight vector of each slave operation module is a row vector corresponding to the slave operation module in the weight matrix.

3. The device according to claim 1, wherein the activation function "active" used by the master operation module is any of the nonlinear functions "sigmoid", "tanh", "relu", "softmax" or a linear function.

4. The device according to claim 1, wherein the main operation module biases the intermediate result vector and then performs an activation operation.

5. The device according to claim 1, wherein the interconnection module constitutes a data path of the continuous or discrete data between the master operation module and the plurality of slave operation modules, and the interconnection module is any one of the following structures: a tree structure, a ring structure, a grid structure, a hierarchical interconnection and a bus structure.

6. The device according to claim 1, wherein the master operation module includes a first operation unit, a first data dependence determination unit, and a first storage unit, wherein:
a neuron cache unit is used to cache the input data and the output data used by the master operation module in the calculation process;
the first operation unit completes various operation functions of the master operation module;
the first data dependence determination unit is a port where the first operation unit reads and writes the first storage unit, guarantees that there is no inconsistency conflict in reading and writing data of the first storage unit, and is responsible for reading the input neuron vector from the first storage unit, and sending the input neuron vector to the slave operation module through the interconnection module; and
the intermediate result vector from the interconnection module is sent to the first operation unit.

7. The device according to claim 1, wherein each slave operation module includes a second operation unit, a second data dependence determination unit, a second storage unit and a third storage unit, wherein:
the second operation unit receives a control signal sent by the controller unit and performs arithmetic and logic operation;
the second data dependence determination unit is responsible for the reading and writing operation to the second storage unit and the third storage unit in the calculation process, guarantees that there is no consistency conflict in reading and writing the second storage unit and the third storage unit;
the second storage unit caches the data of the input neuron vector and the output neuron value calculated from the slave operation module; and
the third storage unit caches the weight vector required by the slave operation module in the calculation process.

8. The device according to claim 6 or 7, wherein the first and second data dependence determination unit guarantees that there is no consistency conflict in reading and writing by the following means: determining whether there is a dependency between the control signal that has not been performed and the data of the control signal that is being performed, if not, allowing the control signal to be transmitted immediately, otherwise the control signal being not allowed to transmit until all the control signals on which the control signal depends are completely performed.

9. A method for performing a forward propagation process for a single layer of fully connected layers of artificial neural network using the device according to any one of claims 1-8, comprising:
step S1.1, storing an initial instruction in the instruction storage unit;
step S1.2, reading an instruction from the instruction storage unit;
step S1.3, translating the read instruction;
step S1.4, based on a control signal obtained by the translating, performing the corresponding operation;
step S1.5, writing the result of the operation back to the corresponding storage unit.

10. A method for performing a forward propagation process for single-layer fully connected layers of artificial neural network using the device according to any one of claims 1-8, comprising:
At step S2.1, an IO instruction is initially, stored in the instruction storage unit.
at step S2.2, initiating the operation, the controller unit reads the IO instruction from the instruction storage unit, and based on the translated control signal, the data access unit reads all corresponding operation instructions of fully connected layers for artificial neural network from an external address space and stores them in the instruction storage unit;
at step S2.3, then the controller unit reads the next IO instruction from the instruction storage unit, and based on the translated control signal, the data access unit reads all data required by the master operation module from the external address space to the first storage unit of the master operation module;
at step S2.4, then again the controller unit reads the next IO instruction from the instruction storage unit, and based on the translated control signal, the data access unit reads the weigh matrix data required from the slave operation module from the external address space; at step S2.6, the controller unit then reads the next COMPUTE instruction from the instruction storage unit, and based on the translated control signal, the master operation firstly sends the input neuron vector to each slave operation module through the interconnection module, save them to the second storage unit of the slave operation module;
at step S2.7, based on a control signal translated by the COMPUTE instruction, the second operation unit of the slave operation module reads the weight vector from the third storage unit, reads the input neuron vector from the second storage unit, completes the dot product operation of the weight vector and the input neuron vector, and returns the intermediate result through the interconnection module;
at step S2.8, in the interconnection module, each intermediate result returned by the slave operation module is sliced into a complete intermediate result vector level by level;
at step S2.9, the master operation module obtains the value returned from the interconnection module reads the biased vector from the first storage unit based on the control signal translated by the COMPUTE instruction, and adds the vector returned by the interconnection module through the vector addition unit, and then the activation unit activates the result and writes the final output neuron vector back to the first storage unit;
at step S2.10, then the controller unit reads the next IO instruction from the instruction storage unit, and based on the translated control signal, the data access unit saves the output neuron vector in the storage unit to a designated address in the external address space; finally, the operation ends.

11. The method according to claim 10, further comprising performing between step S2.4 and step S2.6: at step S2.5, the controller unit then reads the next CONFIG instruction from the instruction storage unit, and based on the translated control signal, configures various constants required for the operation of this layer of neural network.

12. A method for performing a forward propagation process for multi-layer fully connected layers of artificial neural network, comprising:
for each fully connected layer of artificial neural network, performing the method according to claim 10, wherein after performing the previous fully connected layer of artificial neural network, the operation instruction of the next layer uses the output neuron address of the previous layer stored in the master operation unit as the input neuron address of the present layer, and changes the address of weight and/or the biased data in the instruction into corresponding addresses of the present layer.
